# EUROPÄISCHE PATENTSCHRIFT

(11) **EP 3 747 612 B1**
(45) Veröffentlichungstag und Bekanntmachung des Hinweises auf die Patenterteilung: **30.08.2023**
(21) Anmeldenummer: 20173455.5
(22) Anmeldetag: 07.05.2020
(51) Int. Cl.: B29B 7/58, B29B 7/76, B29B 7/72, B29B 7/40

(54) **VORRICHTUNG ZUM MISCHEN VON ZWEI ODER MEHR KOMPONENTEN**
DEVICE FOR MIXING TWO OR MORE COMPONENTS
DISPOSITIF DE MÉLANGE D'AU MOINS DEUX COMPOSANTS

(30) Priorität: 03.06.2019 DE 102019114743
(43) Veröffentlichungstag der Anmeldung: 09.12.2020
(73) Patentinhaber: Hilger u. Kern GmbH, 68167 Mannheim (DE)
(72) Erfinder: Geier, Daniel, 68782 Brühl (DE); Flügel, Maximilian, 64686 Lautertal (DE)
(74) Vertreter: Kesselhut, Wolf

(56) Entgegenhaltungen:
- EP-A1- 1 142 688
- WO-A1-2017/004637
- DE-A1- 2 940 152
- DE-A1- 4 235 850
- DE-A1- 19 848 357
- DE-A1-102018 008 035
- DE-U1-202005 013 008
- DE-U1-202015 100 624
- US-A- 4 579 515

## Beschreibung

Die Erfindung betrifft eine Vorrichtung zum Mischen von zwei oder mehr Komponenten gemäß dem Oberbegriff von Anspruch 1.

Eine derartige Vorrichtung, mit der sich beispielsweise die zwei oder mehr Komponenten eines Mehrkomponenten-Kunststoffgemischs, wie beispielsweise eines Klebstoffs, miteinander vermischen lassen, ist aus der DE 42 35 850 A1 bekannt. Die dort beschriebene Vorrichtung umfasst eine Mischkammer mit zwei Zufuhrkanälen zur Zufuhr der zu vermischenden Komponenten, in der ein Mischelement angeordnet ist. Das Mischelement, das in der vorliegenden Anmeldung auch als Mischkopf bezeichnet wird, wird durch einen Motor über eine Antriebswelle rotiert und kann über eine Hubeinrichtung in axialer Richtung aus einer Freigabeposition in eine Schließposition verfahren werden. In der Schließposition verschließt die Spitze des Mischelements eine am Boden der Mischkammer angeordnete Auslassöffnung für das fertig gemischte Mehrkomponentengemisch. Zur Bewegung des mit der Antriebswelle gekoppelten Mischelements umfasst die Hubeinrichtung einen in einem Zylinder geführten Kolben, der über ein Kugellager in Umfangsrichtung drehbar und in axialer Richtung gestellfest mit der Antriebswelle gekoppelt ist. Aufgrund der pneumatischen oder hydraulischen Betätigung des Kolbens innerhalb des Zylinders lässt sich das Mischelement lediglich aus der Schließposition in die Freigabeposition verfahren, ohne dass beispielsweise die Bewegungsgeschwindigkeit oder der Bewegungsweg nach einem vorgegebenen Bewegungsprofil verändert werden können. Hierdurch ist es mit der Anordnung nicht möglich, die Menge des während des Öffnungs- und Schließvorgangs aus der Auslassöffnung austretenden Mehrkomponentengemischs, welches auch durch die Hubbewegung beeinflusst wird, entsprechend einem gewünschten Mengenprofil zu verändern, um beispielsweise bei zwei überlappenden Klebstoffraupen auch im Überlappungsbereich eine konstante Klebstoffmenge sicherzustellen. Darüber hinaus ist hierdurch das Dichtelement, an welchem die Spitze des Mischelements beim Schließen der Auslassöffnung anliegt, vergleichsweise großen mechanischen Belastungen ausgesetzt, was zu einem hohen Verschleiß führt.

Weitere Vorrichtungen der eingangs beschriebenen Art mit einer einteiligen Antriebswelle sind aus der DE 198 483 57 A1 und der DE 20 2005 013 001 U1 bekannt.

Demgemäß ist es eine Aufgabe der vorliegenden Erfindung, eine Vorrichtung zum Mischen von zwei oder mehr Komponenten zu schaffen, welche die zuvor genannten Nachteile überkommen.

Diese Aufgabe wird erfindungsgemäß durch eine Vorrichtung mit den Merkmalen von Anspruch 1 gelöst.

Weitere Merkmale der Erfindung sind in den Unteransprüchen beschrieben.

Gemäß der Erfindung umfasst eine Vorrichtung zum Mischen von zwei- oder mehr Komponenten, insbesondere eines Kunststoffgemisches, eine gestellfest in einem Gehäuse aufgenommene Mischkammer. Die Mischkammer weist mindestens zwei Zufuhrkanäle, über die die zu vermischenden Komponenten zugeführt werden, und ein Mischelement auf, das durch einen ersten Motor über eine Antriebswelle rotiert werden kann. Weiterhin umfasst die Vorrichtung eine Hubeinrichtung, mittels welcher das Mischelement innerhalb der Mischkammer zum Verschließen einer im Bewegungsweg des Mischelements angeordneten Auslassöffnung aus einer Freigabeposition in eine Schließposition verfahren werden kann. Die erfindungsgemäße Vorrichtung zeichnet sich dadurch aus, dass die Antriebswelle in einen ersten motorseitigen Wellenabschnitt und einen zweiten mischkopfseitigen Wellenabschnitt aufgeteilt ist, die über ein Ausgleichselement drehfest und federelastisch miteinander gekoppelt sind. Das Ausgleichselement enthält hierzu federelastische Mittel, die den ersten motorseitigen Wellenabschnitt vom zweiten mischkopfseitigen Wellenabschnitt wegdrängen. Durch die Aufteilung der Antriebswelle in zwei durch federelastische Mittel gekoppelte Wellenabschnitte ist es möglich, die von der Spitze des Mischelements auf das Gleitelement der Auslassöffnung ausgeübte Druckkraft nach dem Verfahren desselben in die Schließstellung über einen größeren Verfahrweg des ersten motorseitigen Wellenabschnitts hinweg sanfter ansteigen zu lassen, wodurch der Verschleiß des Materials in vorteilhafter Weise erheblich reduziert wird.

In einer Ausführungsform der Erfindung umfasst das Ausgleichselement als federelastisches Element eine Druckfeder, insbesondere eine Spiraldurckfeder, deren Vorspannung bevorzugt konstant ist, jedoch gewünschtenfalls auch veränderbar sein kann. Weiterhin kann es vorgesehen sein, dass das Ausgleichselement ein zusätzliches dämpfendes Element umfasst, das zu einem Abklingen möglicher Schwingungsanregungen des federelastischen Elements führt. Auf diese Weise kann verhindert werden, dass sich die Dosiermenge während eines Dosiervorgangs aufgrund einer Anregung von Schwingungen der Druckfeder, bzw. der Wellenabschnitte unerwünschterweise beim Dosieren des fertigen Gemischs dadurch ändert.

Die bevorzugte Ausführungsform der erfindungsgemäßen Vorrichtung umfasst in vorteilhafter Weise eine Lagerhülse, die über mischkopfseitige Radialkugellager koaxial auf dem mischkopfseitigen Wellenabschnitt der Antriebswelle gelagert ist. Die Außenseite der Lagerhülse ist hierbei bevorzugt als eine zylindermantelförmige Gleitfläche ausgeführt, in der bevorzugt eine Nut geformt ist. Durch diese Bauweise ist die Lagerhülse in axialer Richtung verschiebbar und kann in umfänglicher Richtung durch ein in die Nut eingreifendes Sicherungselement gesichert innerhalb einer korrespondierend zur Gleitfläche ausgeformten Innenfläche des Gehäuses geführt werden. Hierdurch ergibt sich der Vorteil, dass die Außenwand der Lagerhülse in axialer Richtung fest mit dem mischkopfseitigen Abschnitt der Antriebswelle verbunden ist und gleichzeitig gegenüber dem Gehäuse und der Hubhülse drehfest angeordnet ist. So ist es möglich, auf einfache Weise die Position der Lagerhülse in axialer Richtung mit Hilfe eines Sensors zu erfassen und dadurch die Position des Mischelements zu bestimmen.

Nach einem weiteren der Erfindung zugrunde liegenden Gedanken ist hierzu an der Außenseite des Gehäuses ein erster Sensor befestigt, der den Abstand zu einem an der Hubhülse befestigten, mit dem ersten Sensor zusammenwirkenden ersten Messgeberelement erfasst, das bevorzugt als ein erster Messfinger ausgeführt ist. Darüber hinaus ist erfindungsgemäß ein zweiter bevorzugt an der Hubhülse aufgenommener Sensor vorgesehen, der den Abstand zu einem an der Lagerhülse befestigten, mit dem zweiten Sensor zusammenwirkenden zweiten Messgeberelement erfasst, das bei einer ersten Ausführungsvariante der Vorrichtung bevorzugt als ein zweiter Messfinger ausgeführt ist. Durch diese Anordnung der zwei Sensoren ist es in vorteilhafter Weise möglich, die Stellung der Hubhülse mit hoher Genauigkeit zu ermitteln, wenn der Mischkopf die Auslassöffnung verschließt. Die relative Position der Hubhülse bezüglich der Lagerhülse ist in der Öffnungsstellung konstant und ändert sich nur, sobald der Mischkopf beim Verfahren in die Schließstellung auf den ringförmigen Aufhahmesitz der Auslassöffnung, bzw. das darin aufgenommene Dichtelement trifft und die federelastischen Mittel des Ausgleichselements eine Längenänderung der Antriebswelle bewirken. Die Position der Hubhülse relativ zum Gehäuse wird hierbei in vorteilhafter Weise erfasst, sobald sich die relative Position der Hubhülse gegenüber der Lagerhülse ändert. Der vom zweiten Sensor erfasste Wert, der der axialen Position der Hubhülse entspricht, in der das Mischelement gerade anfängt, die Auslassöffnung zu verschließen, wird von einer elektronsichen Steuerungseinrichtung als neue Schließposition abgespeichert. Die elektronische Steuerungseinrichtung ist hierbei mit dem ersten und zweiten Sensor verbunden, und steuert in Abhängigkeit von deren Signalen die axiale Position der Hubeinrichtung, d.h. bei der bevorzugten Ausführungsform der Erfindung den zweiten Antriebsmotor, sowie bevorzugt auch die Drehzahl des ersten Antriebsmotors, welcher die Antriebswelle rotiert. Dadurch eröffnet sich die Möglichkeit, die Öffnungstiefe des Mischkopfs durch Messen der Position der Hubhülse gegenüber dem Gehäuse und Bilden der Differenz zur Schließposition zu bestimmen und somit die Dosiermenge durch gezieltes Verfahren des Mischkopfs innerhalb der Öffnungsstellung präzise zu steuern.

Weiterhin kann es vorgesehen sein, dass die Hubeinrichtung eine durch einen zweiten Antriebsmotor rotierbare Gewindehülse umfasst, die zur Bewegung der Hubhülse in axialer Richtung mit einem an der Hubhülse geformten Gewindeabschnitt in Zahneingriff ist. Hierbei ist es aus konstruktiven Gründen bei einer ersten Ausführungsvariante der Erfindung von Vorteil, wenn die Gewindehülse ein Innengewinde und die Hubhülse ein Außengewinde aufweist.

Um die Antriebswelle gleichzeitig zu rotieren und in axialer Richtung zu verfahren, kann es weiterhin vorgesehen sein, dass sich der motorseitige Wellenabschnitt der Antriebswelle durch das Zentrum des zweiten Antriebsmotors hindurch erstreckt und dass die Antriebswelle des zweiten Antriebsmotors eine Hohlwelle ist, mit der die Gewindehülse drehfest und in axialer Richtung unverschiebbar gekoppelt ist. Obgleich der zweite Antriebsmotor auch ein herkömmlicher Elektromotor oder Luftmotor oder dergleichen sein kann, der außerhalb der Längsachse der Antriebwelle positioniert ist und die Gewindehülse über ein Zahnrad antreibt, ergibt sich hierdurch der Vorteil einer räumlich sehr kompakten Bauform.

Wie die Lagerhülse, die zuvor beschrieben wurde, ist bei einer ersten Ausführungsvariante der Erfindung bevorzugt auch die Hubhülse über motorseitige Radialkugellager koaxial auf dem motorseitigen Wellenabschnitt der Antriebswelle gelagert. Entsprechend ist bei dieser Ausführungsvariante der Erfindung auch die Außenseite der Hubhülse eine zylindermantelförmige Gleitfläche, über welche die Hubhülse in axialer Richtung verschiebbar innerhalb einer korrespondierend zur Gleitfläche geformten Innenfläche des Gehäuses geführt ist. In der Innenfläche des Gehäuses ist eine Nut geformt, über die die Hubhülse in radialer Richtung durch ein Sicherungselement, z.B. einen Zapfen, einen Vorsprung oder eine Feder, gegen Rotieren gesichert ist. Die Konfiguration von Nut und Sicherungselement kann jedoch auch invers hierzu ausgestaltet sein, d.h. dass die Nut in der Hubhülse geformt und das Sicherungselement am Gehäuse angeordnet ist.

Weiterhin kann es bei dieser ersten Ausführungsvariante vorgesehen sein, dass der erste Antriebsmotor über eine längenveränderliche Kupplung mit dem dem Mischelement gegenüberliegenden Ende der Antriebswelle gekoppelt ist, um Änderungen in der Länge der Antriebswelle durch das Ausgleichselement bei einer gehäusefesten Anordnung des ersten Motors zu kompensieren. Eine gehäusefeste Anordnung des ersten Motors hat den Vorteil, dass dieser nicht zusätzlich zur Antriebswelle und dem Mischkopf mit auf und ab bewegt werden muss.

Nach einem weiteren der Erfindung zugrunde liegenden Gedanken weist das Mischelement eine sich in Richtung zur Auslassöffnung hin verjüngende konische Form auf; und die Auslassöffnung besitzt auf der Innenseite der Mischkammer einen ringförmigen Aufnahmesitz, in welchem ein Gleitelement, insbesondere ein Gleitring, aufgenommen ist, auf welchem sich das Mischelement mit seiner Spitze in der Schließposition dichtend abstützt. Durch diese Konstruktion lässt sich beim Einsatz eines Gleitelements aus einem federelastischen Material, bzw. einem durch eine federelastische Kraft in Aufwärtsrichtung beaufschlagten verschiebbaren Gleitelement, auch bei sehr abrasiven Komponenten ein unbeabsichtigtes Austreten des Gemisches der Komponenten aus der Mischkammer über einen langen Zeitraum hinweg zuverlässig verhindern.

Der erste Antriebsmotor und/oder der zweite Antriebsmotor ist bevorzugt ein Schrittmotor oder ein Servomotor, der jeweils durch die zuvor erwähnte elektronische Steuerungs- und Regelungseinrichtung gemäß einem vorgegebenen Geschwindigkeitsprofil angetrieben werden kann. Hierbei stellt es einen besonderen Vorteil der Erfindung dar, dass das Mischelement durch die Verwendung eines solchen Motors nicht nur in Abhängigkeit von der jeweiligen Mischanwendung mit einem passenden, bevorzugt abgespeicherten Geschwindigkeitsprofil angetrieben werden kann, sondern dass auch eine Drehpositionierung des ersten Motors und damit eine exakte Winkelpositionierung des Mischkopfs ermöglicht wird, was es erlaubt, den Mischkopf beim Anfahren der Schließposition mit großer Genauigkeit in der Endposition zu positionieren. Hierdurch ergibt sich in Verbindung mit der federelastischen Kopplung des ersten und zweiten Wellenabschnitts in vorteilhafter Weise die Möglichkeit einer flexiblen und hochpräzisen Dosierung der gemischten Komponenten über einen vollständigen Dosierzyklus in Verbindung mit einer Verringerung des Verschleißes des Gleitelements aufgrund der durch die federelastische Kopplung der beiden Wellenabschnitte der Antriebswelle bedingten sanfteren Schließbewegung.

Nach einem weiteren der Erfindung zugrunde liegenden Gedanken ist der zweite Antriebsmotor auf der Basis eines extern zugeführten Start- und/oder Stoppsignals einer übergeordneten Maschinensteuerungseinrichtung nach einem vorgegebenen Drehzahlprofil aus der Schließposition in die Freigabeposition und/oder aus der Freigabeposition in die Schließposition verfahrbar. Dies hat den Vorteil, dass die Vorrichtung automatisierbar ist und beispielsweise mittels der Steuerungs- und Regelungseinrichtung in ein Produktionsleitsystem eingebunden werden kann.

Die Erfindung wird nachfolgend mit Bezug auf die Zeichnungen anhand bevorzugter Ausfuhrungsformen beschrieben.

In den Zeichnung zeigen:
- Fig. 1: eine Schnittdarstellung einer erfindungsgemäßen Vorrichtung zum Mischen von zwei oder mehr Komponenten gemäß einer ersten Ausführungsvariante,
- Fig. 2: eine Schnittdarstellung des mischkopfseitigen Teils der ersten Ausführungsvariante der erfindungsgemäßen Vorrichtung zum Mischen von zwei oder mehr Komponenten,
- Fig. 3: eine Schnittdarstellung des motorseitigen Teils der ersten Ausführungsvariante der Erfindung,
- Fig. 4: eine Schnittdarstellung der ersten Sensoreinheit bei der ersten Ausführungsvariante der erfindungsgemäßen Vorrichtung,
- Fig. 5: eine Schnittdarstellung der zweiten Sensoreinheit bei der Ausführungsvariante der Figs. 1 bis 4,
- Fig. 6a, b, c: vereinfachte Darstellungen der ersten Ausführungsvariante der erfindungsgemäßen Vorrichtung in verschiedenen Stellungen von Hub- und Lagerhülse, und
- Fig. 7: eine zweite Ausführungsvariante der erfindungsgemäßen Vorrichtung, bei der das erste und zweite Messwertgeberelement als Ringmagnet ausgeführt ist, welcher an der Hubhülse, bzw. Lagerhülse aufgenommen ist.

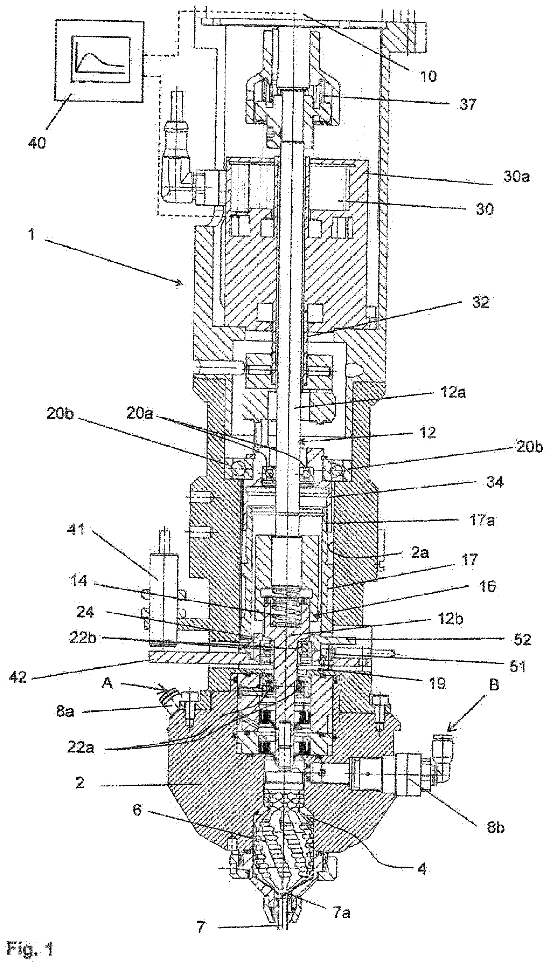

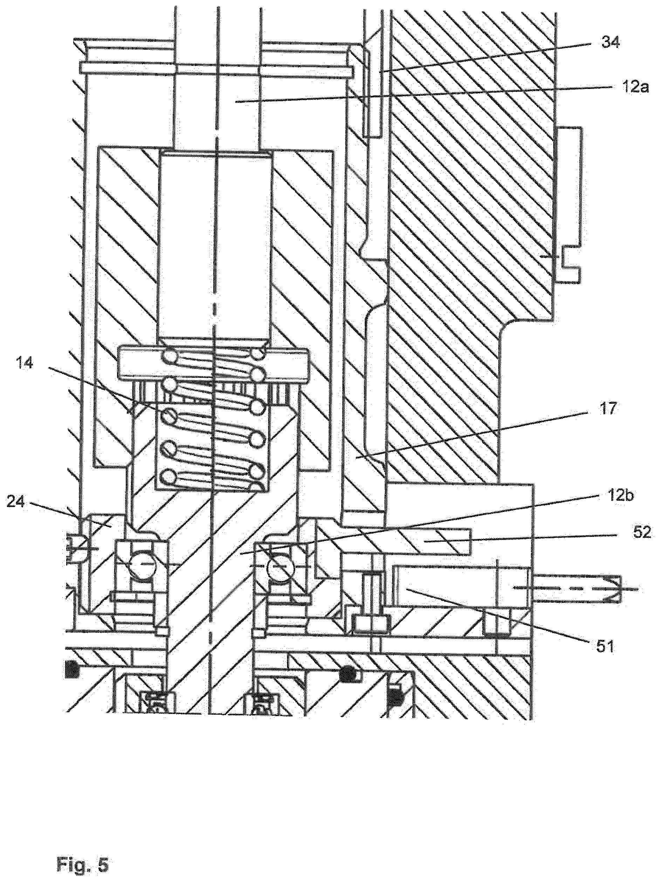

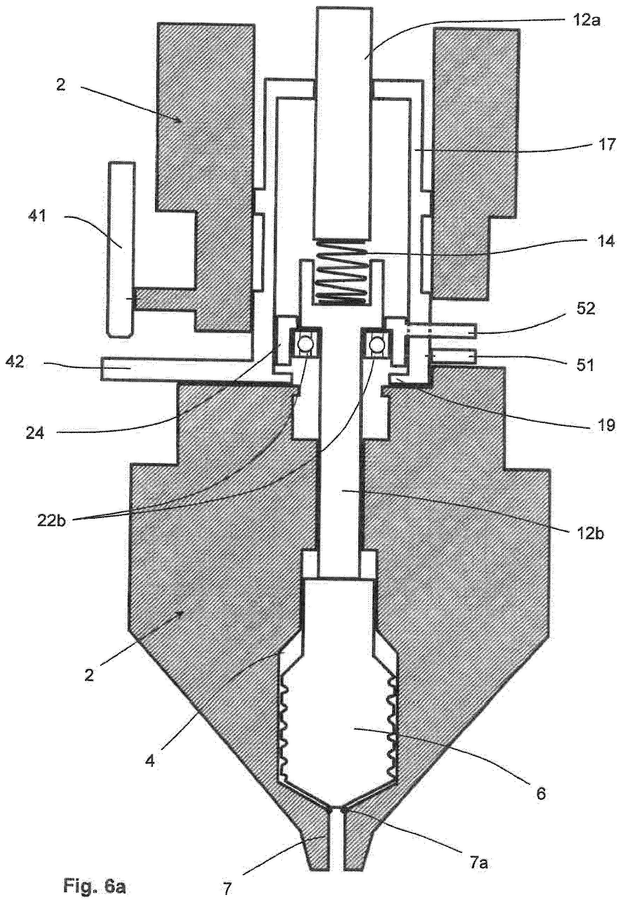

Wie in den Figs. 1 bis 6c dargestellt ist, umfasst eine erfindungsgemäße Vorrichtung 1 zum Mischen von zwei- oder mehr Komponenten A, B, insbesondere eines Kunststoffgemisches, gemäß einer ersten Ausführungsvariante eine gestellfest in einem Gehäuse 2 aufgenommene Mischkammer 4 mit wenigstens zwei Zufuhrkanälen 8a, 8b, über die die zu vermischenden Komponenten in die Mischkammer 4 zugeführt werden. In der Mischkammer 4 ist ein Mischelement 6 angeordnet, welches durch einen ersten Motor 10 über eine Antriebswelle 12 rotiert werden kann. Die Antriebswelle 12 wird über eine Hubeinrichtung 16 in axialer Richtung bewegt, wodurch das Mischelement 6 innerhalb der Mischkammer 4 zum Verschließen einer im Bewegungsweg des Mischelements 6 angeordneten Auslassöffnung 7 aus einer Freigabeposition in axialer Richtung relativ zur Mischkammer 4 in eine Schließposition verfahren werden kann. Die Antriebswelle 12 ist erfindungsgemäß in einen ersten motorseitigen Wellenabschnitt 12a und einen zweiten mischkopfseitigen Wellenabschnitt 12b unterteilt, die über ein Ausgleichselement 14 drehfest, aber in axialer Richtung relativ zueinader beweglich miteinander gekoppelt sind. Das Ausgleichselement 14 enthält federelastische Mittel, bevorzugt eine in Fig. 1 dargestellte Druckfeder, die den ersten motorseitigen Wellenabschnitt 12a vom zweiten mischkopfseitigen Wellenabschnitt 12b wegdrängen. Weiterhin kann es vorgesehen sein, dass das Ausgleichselement 14, wie in Fig. 1 ebenfalls angedeutet, zusätzlich ein dämpfendes Element 15 umfasst, bzw. enthält, welches die Anregung von Axialschwingungen des ersten und zweiten Wellenabschnitts 12a, 12b dämpft. Alternativ kann das federelastische Element auch ein in den Zeichnungen nicht dargestellter Block aus gumielastischem Material mit ensprechenden schwingungsdämpfenden Eigenschaften sein, bzw. einen solchen enthalten. Die federelastischen Mittel sind hierbei bevorzugt so ausgestaltet, dass die jeweiligen Enden des ersten und zweiten Wellenabschnitts 12a, 12b mit einer vorgegebenen und bevorzugt auch einstellbaren Vorspannung beaufschlagt und gegen einen entsprechend ausgestalteten Anschlag 19 gedrängt werden, welcher die axiale Bewegung der beiden Wellenabschnitte 12a, 12b voneinander weg begrenzt. Der Anschlag 19 wird bei der in den Figs. 1 bis 6c dargestellten ersten Ausführungvariante der Erfindung durch einen am unteren Ende der Hubhülse 17 geformten Finger oder Kragen und die untenliegende Stirnfläche der Lagerhülse 24 gebildet, wie dies am besten in Fig. 6a erkennbar ist.

Bei der bevorzugten Ausführungsform der Erfindung weist das in der Mischkammer 4 angeordnete Mischelement 6 eine sich in Richtung zur Auslassöffnung 7 hin verjüngende konische Form auf. Die Auslassöffnung 7 besitzt auf der Innenseite der Mischkammer 4 einen ringförmigen Aufnahmesitz 7a, in dem ein Gleitelement, insbesondere ein Gleitring, aufgenommen ist, auf dem sich das Mischelement 6 mit seiner Spitze in der Schließposition dichtend abstützt.

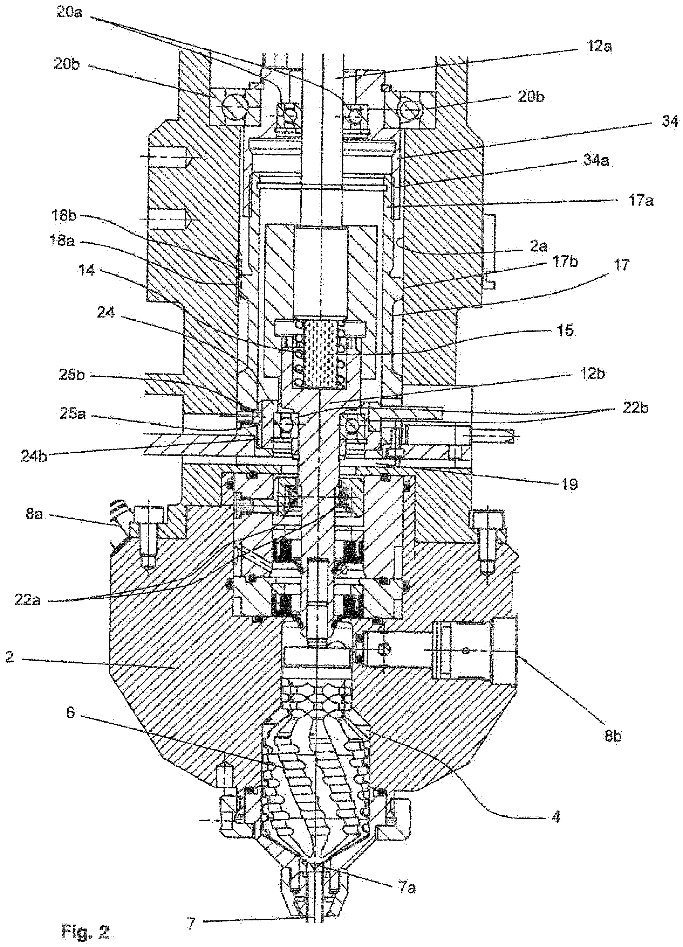

Wie in Fig. 2 in einer vergrößerten Darstellung gezeigt ist, ist eine in der Hubeinrichtung 16 enthaltene Lagerhülse 24 über mischkopfseitige Radialkugellager 22a, 22b koaxial auf dem mischkopfseitigen Wellenabschnitt 12b der Antriebswelle 12 gelagert. Die Außenseite der Lagerhülse 24 hat eine zylindermantelförmige Form, die als Gleitfläche 24b dient, so dass die Lagerhülse 24 in axialer Richtung verschiebbar innerhalb einer korrespondierend zur Gleitfläche 24b ausgeformten Innenfläche 2a des Gehäuses 2 geführt ist. Bevorzugt ist in dieser Gleitfläche 24b eine Nut 25a geformt, über die die Lagerhülse 24 durch ein in die Nut 25a eingreifendes Sicherungselement 25b in umfänglicher Richtung gegen ein Verdrehen gesichert wird.

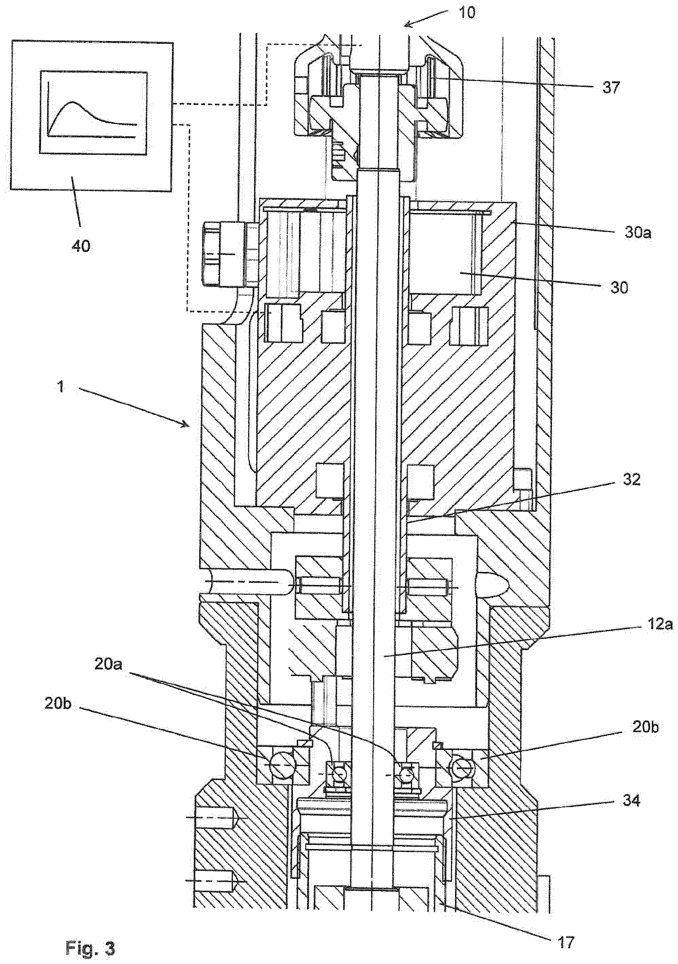

Obgleich die Hubeinrichtung 16 grundsätzlich jedwede Anordnung zum motorischen axialen Verfahren des ersten motorseitigen Wellenabschnitts 12a sein kann, z.B. ein Zahnstangenantrieb mit Drehentkopplung, umfasst diese bevorzugt eine Hubhülse 17 und eine durch einen zweiten Antriebsmotor 30, der in der vergrößerten Darstellung von Fig. 3 gezeigt ist, rotierbare Gewindehülse 34, die zur axialen Bewegung der Hubhülse 17 mit einem an der Hubhülse 17 geformten Gewindeabschnitt 17a in Zahneingriff ist. In der bevorzugten Ausführungsform der ersten Ausführungsvariante weist die Gewindehülse 34 ein Innengewinde und die Hubhülse 17 ein Außengewinde auf

Hierbei kann es weiterhin vorgesehen sein, dass die Antriebswelle 32 des zweiten Antriebsmotors 30 eine Hohlwelle ist, mit der die Gewindehülse 34 drehfest und in axialer Richtung unverschiebbar gekoppelt ist, und dass sich der motorseitige Wellenabschnitt 12a der Antriebswelle 12, wie in Fig. 1 gezeigt, durch das Zentrum des zweiten Antriebsmotors 30 hindurch erstreckt.

Wie der Darstellung von Fig. 2 weiterhin zu entnehmen ist, ist die Hubhülse 17 bei der ersten Ausführungsvariante der Erfindung über motorseitige Radialkugellager 20a, 20b koaxial auf dem motorseitigen Wellenabschnitt 12a der Antriebswelle 12 gelagert. Die Außenseite der Hubhülse 17 umfasst hierbei eine zylindermantelfönnige Gleitfläche 17b, über welche die Hubhülse 17 in axialer Richtung verschiebbar innerhalb einer korrespondierend zur Gleitfläche 17b geformten Innenfläche 2a des Gehäuses 2 geführt ist. In der Innenfläche 2a des Gehäuses 2 ist bevorzugt eine Nut 18a geformt, mittels welcher die Hubhülse 17 in radialer Richtung durch ein in diese eingreifendes Sicherungselement 18b, z.B. einen an der Hubhülse 17 geformten Vorsprung, bei einer axialen Verschiebung gegen eine umfängliche Drehung gesichert werden kann. Die Konfiguration von Nut und Sicherungselement kann jedoch auch invers ausgeführt sein.

Wie in Fig. 3 dargestellt ist, ist der erste Antriebsmotor 10 bei der ersten Ausführungsvariante der Erfindung über eine längenveränderliche Kupplung 37 mit dem dem Mischelement 6 gegenüberliegenden ersten motorseitigen Wellenabschnitt der Antriebswelle 12 gekoppelt, wodurch eine Bewegung des motorseitigen ersten Wellenabschnitts 12a der Antriebswelle 12 bei gehäusefester Aufnahme des ersten Antriebsmotors 10 ausgeglichen werden kann.

Bei der bevorzugten Ausführungsform der Erfindung gemäß der ersten uns zweiten Ausführungsvariante ist der erste Antriebsmotor 10 und auch der zweite Antriebsmotor 30 ein Elektromotor, insbesondere ein Schrittmotor oder ein Servomotor, die jeweils durch eine elektronische Steuerungs- und Regelungseinrichtung 40 gemäß einem vorgegebenen Geschwindigkeitsprofil angetrieben werden.

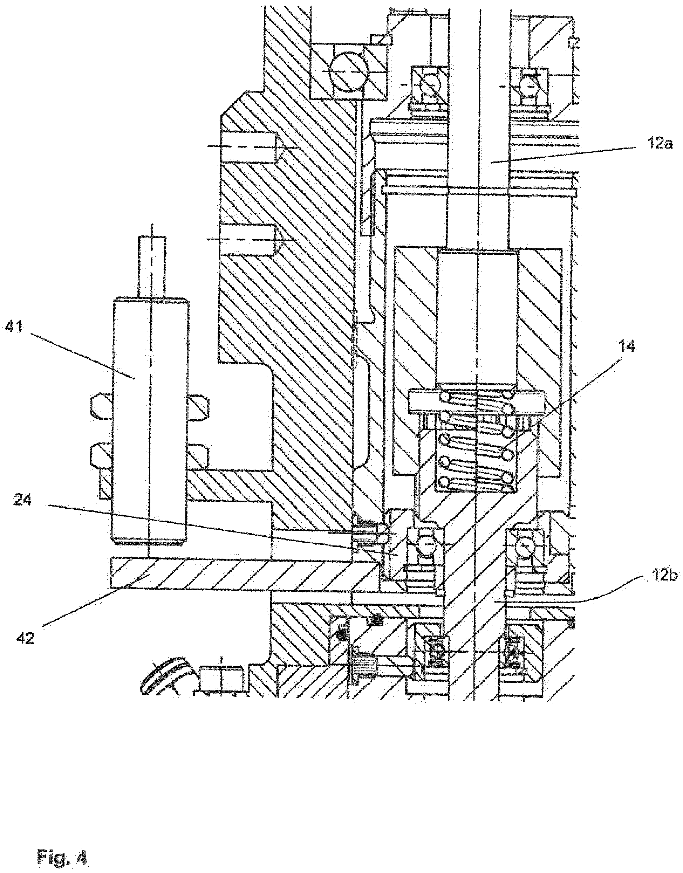

Wie in Fig. 4 in einer vergrößerten Darstellung gezeigt ist, ist bei einer der ersten Ausführungsvariante der Erfindung an der Außenseite des Gehäuses 2 ein erster Sensor 41 aufgenommen, der den Abstand zu einem an der Hubhülse 17 befestigten, mit dem ersten Sensor 41 zusammenwirkenden ersten Messgeberelement, insbesondere einem ersten Messfinger 42, misst. Zudem ist bevorzugt an der Hubhülse 17 ein zweiter Sensor 51 aufgenommen, der erfindungsgemäß den Abstand zu einem an der Lagerhülse 24 befestigten, mit dem zweiten Sensor 51 zusammenwirkenden zweiten Messgeberelement, insbesondere einem zweiten Messfinger 52 erfasst. Die beiden Sensoren 41 und 51 können z.B. bekannte induktive Sensoren, Hallsensoren oder auch sonstige bekannte analoge Wegmessensoren sein.

Ein Verfahren zur Kalibrierung der zuvor beschriebenen erfindungsgemäßen Vorrichtung 1 für welches kein Schutz begehrt wird, und durch welches sich die Genauigkeit bei der Steuerung und/oder Regelung der Dosiermenge beim Einsatz der erfindungsgemäßen Vorrichtung 1 in vorteilhafter Weise beachtlich erhöhen lässt, wird nachfolgend anhand der in Fig. 6a bis 6c gezeigten vereinfachten Darstellung der ersten Ausführungsvariante der erfindungsgemäßen Vorrichtung 1 beschrieben.

Fig. 6a zeigt zum leichteren Verständnis eine vereinfachte Darstellung der erfindungsgemäßen Vorrichtung nach der ersten Ausführungsvariante, bei der das Mischelement 6 in die Endposition der Schließstellung verfahren wurde, wie durch die Stauchung der federelastischen Mittel des Ausgleichselements 14 und den Abstand zwischen der Hubhülse 17 und der Lagerhülse 24 angedeutet ist.

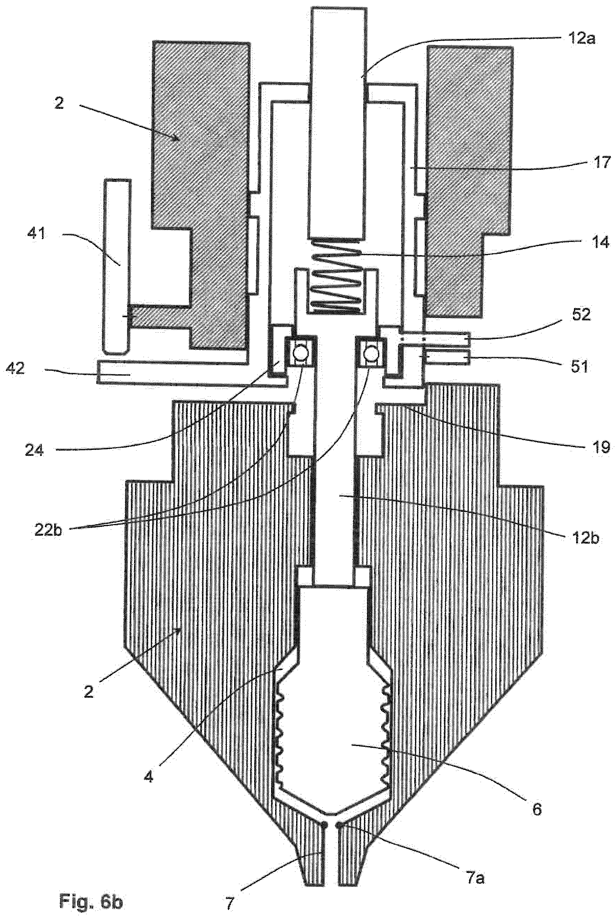

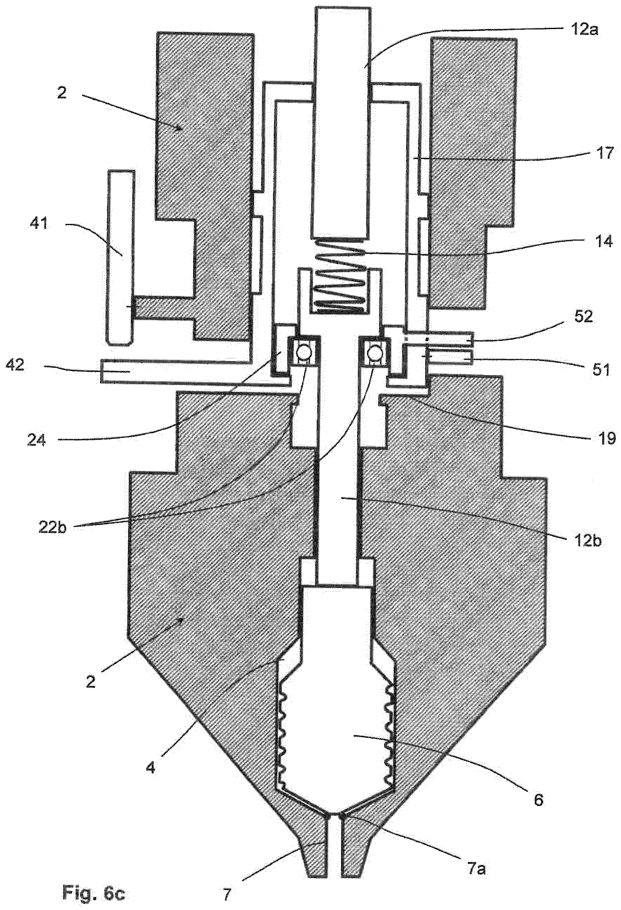

Zur Kalibrierung der erfindungsgemäßen Vorrichtung 1 wird das Mischelement 6 durch Antreiben des zweiten Antriebsmotors 30 aus einer in Fig. 6b gezeigten Öffnungsstellung in axialer Richtung auf die Austrittsöffnung 7 zu bewegt, wobei das vom zweiten Sensor 51 erzeugte Ausgangssignal, welches auch als Positionssignal bezeichnet wird, durch die elektronische Steuerungs- und Regelungseinrichtung 40 fortlaufend daraufhin überwacht wird, ob sich dieses ändert oder nicht. Sobald die elektronische Steuerungs- und Regelungseinrichtung 40 eine Änderung des Positionssignals erfassst, was einer Änderung des Abstands zwischen dem ersten motorseitigen Wellenabschnitt 12a und dem zweiten mischkopfseitigen Wellenabschnitt 12b bedeutet, stoppt die elektronische Steuerungs- und Regelungseinrichtung 40 die Drehung des zweiten Antriebsmotors 30. In dieser in Fig. 6c angedeuteten axialen Stellung des Mischelements 6, welche der Schließstellung des Mischelements 6 entspricht, in der die Spitze desselben die Auslaßöffhung 6 am unteren Ende der Mischkammer 6 gerade eben verschließt, wird von der elektronischen Steuerungs- und Regelungseinrichtung 40 sodann der vom ersten Sensor 41 erfasste Wert, welcher ein Maß für die axiale Position des ersten motorseitigen Wellenabschnitts 12a darstellt, als neue Schließstellung abgespeichert, beispielweise in einem elektronischen Speicher der elektronischen Steuerungs- und Regelungseinrichtung 40.

Ausgehend von dieser neuen Schließposition wird das Mischelement 40 bei den sich anschließenden Dosiervorgängen dann durch Rotieren des zweiten Antriebsmotors 30 um die gewünschten Verfahrwege in axialer Richtung auf und ab verfahren, z.B. durch Rotieren des zweiten Antriebsmotors 30 um einen vorgegebenen Drehwinkelbetrag, bzw. um eine vorgegebene Anzahl von Schritten, um eine vorgegebene Öffnungsstellung zu erreichen, in der ein gewünschter Volumenstrom an fertig gemischtem Mehrkomponentengemisch aus der Auslassöffnung 7 austritt. Dieser kann einmalig oder auch wiederholt durch "Auslitern" ermittelt werden, wozu ausgehend von der zuvor ermittelten neuen Schließstellung der vom ersten Sensor 41 erfasste jeweilige axiale Positionswert oder ein zu diesem korrespondierender Wert, z.B. der Drehwinkel des zweiten Antriebsmotors 30, zusammen mit dem zugehörigen Volumenstromwert in einen Speicher abgelegt wird.

Nach einem weiteren Gedanken kann es vorgesehen sein, dass das Mischelement 6 nach dem Erreichen der Schließstellung noch um einen vorgegebenen zusätzlichen Verfahrweg in axialer Richtung über die in der zuvor beschriebenen Weise durch Kalibrierung erhaltene neue Schließstellung hinaus bewegt wird, um die federelastischen Mittel des Ausgleichselements 14 weiter zu komprimieren und dadurch die Andruckkraft des Mischelements 6 auf den ringförmigen Aufhahmesitz 7a der Auslassöffnung 7 zum Zwecke einer verbesserten Abdichtung zu erhöhen. So kann der zweite Antriebsmotor 30 im Falle eines Schrittmotors z.B. noch um eine vorgegebene feste Schrittzahl, z.B 10 oder 20 Schritte, weiter rotiert werden, um das Mischelement 6 mit einer vorgegebenen Andruckkraft in den ringförmigen Aufnahmesitz 7a zu drängen.

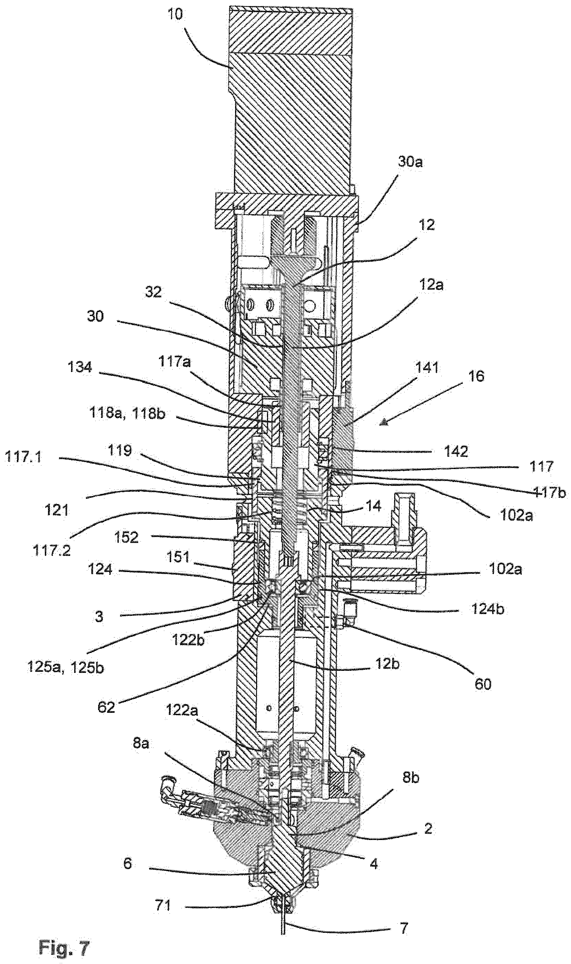

Bei einer zweiten, in Fig. 7 dargestellten Ausführungsvariante der erfindungsgemäßen Vorrichtung, bei der korrespondierende, von der ersten, zuvor beschriebenen Ausführungsvariante der Figs. 1 bis 6c maßgebliche abweichende Komponenten mit um 100 erhöhten Bezugsziffern bezeichnet sind, umfasst die Hubeinrichtung 16 eine Hubhülse 117, und am Gehäuse 2 der Vorrichtung ist in Höhe der Hubhülse 117 ein erster Sensor 141 aufgenommen, der den Abstand zu einem an der Hubhülse 117 befestigten und mit dem ersten Sensor 141 zusammenwirkenden ersten Messgeberelement 142 erfasst, welches bevorzugt als ein erster Magnet, insbesondere Ringmagnet, ausgeführt ist.

Am Gehäuse 2 ist bei dieser zweiten Ausführugsvariante ein zweiter Sensor 151 aufgenommen, der den Abstand zu einem an der Lagerhülse 124 und/oder an der Hubhülse 117 aufgenommenen und mit dem zweiten Sensor 151 zusammenwirkenden zweiten Messgeberelement erfasst, welches bevorzugt als zweiter Magnet 152, insbesondere als Ringmagnet ausgeführt ist.

Der zweite mischkopfseitige Wellenabschnitt 12b ist über mischkopfseitige Radialkugellager 122b koaxial in der Lagerhülse 124 gelagert. Die Außenseite der Lagerhülse 124 weist eine zylindermantelförmige Gleitfläche 124b auf, über welche die Lagerhülse 124 in axialer Richtung verschiebbar und in radialer Richtung drehfest innerhalb einer korrespondierend zur Gleitfläche 124b ausgeformten Innenfläche 102a des Gehäuses 2 geführt ist. An ihrem anderen mischkopfseitigen Ende stützt sich der zweite Wellenabschnitt 12b über ein Radiallager 122a unmittelbar am Gehäuse 2 ab, wobei der zweite Wellenabschnitt innerhalb des Radiallagers 122a in einer axialen, nicht näher bezeichneten Gleitführung geführt ist, welche eine axiale Verschiebung des zweiten Wellenabschnitts 12b relativ zum Radiallager 122a beim Verfahren des Mischelements 6 ermöglicht.

Die Hubeinrichtung 16 umfasst auch bei dieser zweiten Ausführungsvariante eine durch den zweiten Antriebsmotor 30 rotierbare Gewindehülse 134, die zur axialen Bewegung der Hubhülse 117 mit einem an der Hubhülse 117 geformten Gewindeabschnitt 117a in Zahneingriff ist. Die Gewindehülse 134 ist bevorzugt als Spindelmutter ausgeführt, die drehfest mit der Antriebswelle des zweiten Antriebsmotors 30 gekoppelt ist und die ein Außengewinde mit dem Gewindeabschnitt 117a aufweist, das in ein entsprechendes, nicht näher bezeichnetes Innengewinde in der Hubhülse 117 eingreift.

In gleicher Weise wie bei der ersten Ausführungsvariante von Fig. 1 erstreckt sich der motorseitige Wellenabschnitt 12a der Antriebswelle 12 auch bei der zweiten Ausführungsvariante durch das Zentrum des zweiten Antriebsmotors 30 hindurch, wozu die Antriebswelle 32 des zweiten Antriebsmotors 30 als Hohlwelle ausgeführt ist, mit der die Gewindehülse 134 drehfest und in axialer Richtung unverschiebbar gekoppelt ist.

Um eine Verschiebung in axialer Richtung und gleichzeitig eine ortsfeste umfängliche Positionierung der Hubhülse 117 zu gewährleisten, weist die Außenseite der Hubhülse 117 eine zylindermantelförmige Gleitfläche 117b auf, über welche die Hubhülse 117 in axialer Richtung innerhalb einer korrespondierend zur Gleitfläche 117b geformten Innenfläche 102a des Gehäuses 2 verschoben werden kann. Dabei wird die Hubhülse 117 über eine Nut 118a und ein in diese eingreifendes Sicherungselement 118b während ihrer axialen Bewegung in Umfangsrichtung gegen ein Verdrehen gesichert.

Anders als bei der ersten Ausführungsvariante ist die Hubhülse 117, wie in Fig. 7 angedeutet, zweiteilig aufgebaut und umfasst einen ersten motorseitigen Hülsenabschnitt 117.1 sowie einen zweiten, mit diesem über einen Gewindeabschnitt 121 verschraubten zweiten mischkopfseitigen Hülsenabschnitt 117.2. Der Vorsprung 119 wird bei dieser Ausführungsvariante durch einen kragenförmigen Vorsprung an der Außenseite des ersten Hülsenabschnitts 117.1 der Hubhülse 117 und einen diesen hintergreifenden, im Querschnitt L-förmigen Abschnitt am zweiten mischkopfseitigen Hülsenabschnitt 117.2 der Hubhülse 117 gebildet.

Durch die Schraubverbindung der beiden Hülsenabschnitte 117.1 und 117.2 ergibt sich der Vorteil einer besonders einfachen Montage der Komponenten im Innerem der Hubhülse 117, wie insbesondere die Druckfeder des Ausgleichselements 14, welche sich durch die Schraubverbindung zudem auch in vorteilhafter Weise mit einer gewünschten Vorspannung vorspannen läßt. Der Längenausgleich des bei dieser Ausführungsvariante von Fig. 7 in vorteilhafter Weise axial ortsfesten ersten Antriebsmotors 10 wird in besonders kompakter Weise im Inneren des zweiten mischkopfseitigen Hülsenabschnitts 117.2 der Hubhülse 117 über einen formschlüssigen Eingriff des mit einer entsprechenden Verzahnung versehenen freien Endes des ersten, in diesem Falle männlichen Wellenabschnitts 12a und des zugehehörigen freien Endes des zweiten mischkopfseitigen weiblichen Wellenabschnitts 12.b erhalten, welch Letzerer eine zur Form des freien Endes des ersten Wellenabschnitts 12a komplementäre Form aufweist.

Um es weiterhin zu ermöglichen, das Mischelement 6 in einem Notfall, z.B. bei einem Notstop, in kürzester Zeit entgegen der federelastischen Kräfte des Ausgleichselements 14 in die Öffnungsposition zu verfahren, ohne den zweiten Antriebsmotor 30 zu betätigen, kann es weiterhin bei beiden der zuvor beschriebenen Ausführungsvarianten vorgesehen sein, dass dem zweiten mischkopfseitigen Wellenabschnitt 12b ein Druckmittelraum 62 zugeordnet ist, der über eine Druckluftzuleitung 60 mit einem Druckfluid, insbesondere Druckluft, beafschlagt werden kann. Der Druckmittelraum 62 wird bei der zweiten Ausführungsvariante von Fig. 7 durch die dem Mischelement 6 zugewandte ringförmige Stirnfläche an der Außenseite der Lagerhülse 124, die in diesem Bereich zylinderförmige Innenfläche des Gehäuses 102a und eine der ringförmigen Stirnfläche gegenüberliegende ringförmige Fläche im Gehäuse 2 begrenzt. Der so definierte Druckmittelraum 62 kann hierbei über in der Zeichnung nich näher bezeichnete O-Ringe abgedichtet werden, die in nicht näher bezeichneten umlaufenden Nuten in der zylindermantelförmigen Außenfläche der Lagerhülse 124 aufgenommen sind. Durch Einspeisen von Druckluft über ein nicht näher gezeigtes Ventil wird dabei in der in Fig. 7 gezeigten Schließstellung des Mischelements 6 infolge der Größe der Stirnfäche der Lagerhülse 124 eine axiale Druckkraft erzeugt, welche größer ist als die von der Druckfeder des Ausgleichselements 14 bereit gestellte Schließkraft, was dazu führt, dass das Mischelement 6 aus jeder axialen Position heraus innerhalb kürzester Zeit, z.B. innerhalb von wenign Millisekunden, in die Öffnungsstellung (nicht gezeigt) verfahren werden kann.

Bei der zweiten Ausführungsvariante umfasst ein Verfahren zur Kalibrierung aufgrund der gegenüber der ersten Ausführungsvariante der Figuren 1 bis 6 geänderten Anordnung der Sensoren 141 und 151, bzw. der an der Hubhülse und/oder Lagerhülse 124 angeordneten Messgeberelemente 142, 152, für das kein Schutz begehrt wird, die folgenden Verfahrensschritte:
- Verfahren des Mischelements 6 aus einer Öffnungsstellung in Richtung der Austrittsöffnung 7 durch Antreiben des zweiten Antriebsmotors 30 und Überwachen der vom ersten Sensor 141 aufgrund der Bewegung des mit der Hubhülse 117 mitbewegten ersten Messgeberelements 142 erzeugten Ausgangssignals sowie des vom zweiten Sensor 151 aufgrund des mit der Lagerhülse 124 mitbewegten zweiten Messgeberelement 152 erzeugten Positionssignals, wobei die Positionssignal der Sensoren 141, 151 durch eine elektronische Steuerungs- und Regelungseinrichtung 40 überwacht werden,
- Anhalten des zweiten Antriebsmotors 30 bei einer Änderung der Differenz zwischen den vom ersten und zweiten Sensor 141, 151 erzeugten Positionssignalen, und
- Erfassen und Abspeichern des vom ersten Sensor 141 erzeugten, der Position des ersten motorseitigen Wellenabschnitts 12a zugeordneten Positionssignals als neue Schließstellung.

Anders ausgedrückt wird bei der zweiten Ausführungsvariante aufgrund der Anordnung des zweiten Messgeberelements 152 an der Hubhülse 117, bzw. Lagerhülse 124 die Signaldifferenz zwischen dem Ausgangssignal des ersten Sensors 141 und dem Ausgangssignal des zweiten Sensors 151 überwacht, um die Vorrichtung 1 auf eine neue Schließposition zu kalibrieren, die sich aufgrund der Abnutzung des Aufnahmesitzes 7a beim Schließen der Auslassöffnung 7 durch das rotierende Mischelement 6 ergibt. Im Übrigen gilt das zuvor in Verbindung mit der ersten Ausführungsvariante zum nicht erfindungsgemäßen Verfahren Gesagte entsprechend.

### Liste der Bezugszeichen

- 1: erfindungsgemäße Vorrichtung
- 2: Gehäuse
- 2a: Innenfläche des Gehäuses
- 4: Mischkammer
- 6: Mischelement
- 7: Auslassöffnung
- 7a: ringförmiger Aufnahmesitz der Mischkammer
- 8a,b: Zufuhrkanäle
- 10: erster Motor
- 12: Antriebswelle des ersten Motors
- 12a: erster motorseitiger Wellenabschnitt
- 12b: zweiter mischkopfseitiger Wellenabschnitt
- 14: Ausgleichselement
- 15: dämpfendes Element
- 16: Hubeinrichtung
- 17: Hubhülse
- 17a: Gewindeabschnitt an Hubhülse
- 17b: zylindermantelförmige Gleitfläche der Hubhülse
- 18a: Nut für Hubhülse
- 18b: Sicherungselement für Hubhülse
- 19: Anschlag
- 20a,b: motorseitige Lager
- 22a,b: mischkopfseitige Lager
- 24: Lagerhülse
- 24b: zylindennantelförmige Gleitfläche der Lagerhülse
- 25a: Nut für Lagerhülse
- 25b: Sicherungselement für Lagerhülse
- 30: zweiter Antriebsmotor
- 30a: Gehäuse des zweiten Antriebsmotors
- 32: Hohlwelle/Antriebswelle des zweiten Antriebsmotors
- 34: Gewindehülse
- 34a: Gewindeabschnitt an Gewindehülse
- 37: längenveränderliche Kupplung
- 40: elektronische Steuerungs- und Regelungseinrichtung
- 41: erster am Gehäuse befestigter Sensor
- 42: erstes an der Hubhülse befestigtes Messgeberelement
- 51: zweiter an der Hubhülse befestigter Sensor
- 52: zweites an der Lagerhülse befestigtes Messgeberelement
- 60: Druckluftzufuhr
- 62: Druckmittelraum
- 102a: Innenfläche des Gehäuses der zweiten Ausführungsvariante
- 117: Hubhülse der zweiten Ausführungsvariante
- 117a: Gewindeabschnitt an Hubhülse der zweiten Ausführungsvariante
- 117b: zylindermantelförmige Gleitfläche der Hubhülse der zweiten Ausführungsvariante
- 117.1: erster motorseitiger Hülsenabschnitt
- 117.1: zweiter mischkopfseitiger Hülsenabschnitt
- 118a: Nut für Hubhülse bei der zweiten Ausführungsvariante
- 118b: Sicherungselement für Hubhülse der zweiten Ausführungsvariante
- 119: Anschlag der zweiten Ausführungsvariante
- 121: Gewindeabschnitt
- 122a: Radiallager für zweiten mischkopfseitigen Wellenabschnitt
- 122b: weitere mischkopfseitige Lager der zweiten Ausführungsvariante
- 124: Lagerhülse der zweiten Ausführungsvariante
- 124b: zylindermantelförmige Gleitfläche der Lagerhülse der zweiten Ausführungsvariante
- 125a: Nut zur umfänglichen Fixierung der Lagerhülse
- 125b: Sicherungselement zur umfänglichen Fixierung der Lagerhülse
- 134: Gewindehülse der zweiten Ausführungsvariante
- 141: erster am Gehäuse befestigter Sensor der zweiten Ausführungsvariante
- 142: erstes an der Hubhülse befestigtes Messgeberelement/Magnet
- 151: zweiter am Gehäuse befestigter Sensor bei der zweiten Ausführungsvariante
- 152: zweites an der Lagerhülse befestigtes Messgeberelement/Magnet

- A, B: zu mischende Komponenten

## Patentansprüche

1. Vorrichtung (1) zum Mischen von zwei oder mehr Komponenten (A, B), insbesondere eines Kunststoffgemisches, umfassend eine gestellfest in einem Gehäuse (2) aufgenommene Mischkammer (4) mit wenigstens zwei Zufuhrkanälen (8a, 8b), über die die zu vermischenden Komponenten in die Mischkammer (4) zuführbar sind, ein in der Mischkammer (4) angeordnetes Mischelement (6), welches durch einen ersten Motor (10) über eine Antriebswelle (12) rotierbar ist, und eine Hubeinrichtung (16), mittels welcher das Mischelement (6) innerhalb der Mischkammer (4) zum Verschließen einer im Bewegungsweg des Mischelements (6) angeordneten Auslassöffnung (7) aus einer Freigabeposition in axialer Richtung relativ zur Mischkammer (4) in eine Schließposition verfahrbar ist,
**dadurch gekennzeichnet, dass**
die Antriebswelle (12) einen ersten motorseitigen Wellenabschnitt (12a) und einen zweiten mischkopfseitigen Wellenabschnitt (12b) aufweist, die über ein Ausgleichselement (14) drehfest miteinander gekoppelt sind, welches federelastische Mittel enthält, die den ersten motorseitigen Wellenabschnitt (12a) vom zweiten mischkopfseitigen Wellenabschnitt (12b) wegdrängen.

2. Vorrichtung nach Anspruch 1,
**dadurch gekennzeichnet, dass**
die Hubeinrichtung (16) eine Hubhülse (17) umfasst, und dass am Gehäuse (2) ein erster Sensor (41) aufgenommen ist, der den Abstand zu einem an der Hubhülse (17) befestigten und mit dem ersten Sensor (41) zusammenwirkenden ersten Messgeberelement erfasst, welches insbesondere als erster Messfinger (42) ausgeführt ist, oder dass die Hubeinrichtung (16) eine Hubhülse (117) umfasst, und dass am Gehäuse (2) ein erster Sensor (141) aufgenommen ist, der den Abstand zu einem an der Hubhülse (117) befestigten, mit dem ersten Sensor (141) zusammenwirkenden ersten Messgeberelement erfasst, welches bevorzugt als ein erster Magnet, insbesondere Ringmagnet (142) ausgeführt ist.

3. Vorrichtung nach einem der vorhergehenden Ansprüche,
**dadurch gekennzeichnet, dass**
eine Lagerhülse (24, 124) über mischkopfseitige Radialkugellager (22a, 22b) koaxial auf dem mischkopfseitigen Wellenabschnitt (12b) der Antriebswelle (12) gelagert ist, und dass die Außenseite der Lagerhülse (24, 124) eine zylindermantelförmige Gleitfläche (24b, 124b) umfasst, über welche die Lagerhülse (24, 124) in axialer Richtung verschiebbar und in radialer Richtung drehfest innerhalb einer korrespondierend zur Gleitfläche (24b, 124b) ausgeformten Innenfläche (2a, 102a) des Gehäuses (2) geführt ist.

4. Vorrichtung nach Anspruch 3,
**dadurch gekennzeichnet, dass**
an der Hubhülse (17) ein zweiter Sensor (51) aufgenommen ist, der den Abstand zu einem an der Lagerhülse (24) aufgenommenen, mit dem zweiten Sensor (51) zusammenwirkenden zweiten Messgeberelement, insbesondere einem zweiten Messfinger (52), erfasst, oder dass am Gehäuse (2) ein zweiter Sensor (151) aufgenommen ist, der den Abstand zu einem an der Lagerhülse (24) aufgenommenen und mit dem zweiten Sensor (151) zusammenwirkenden zweiten Messgeberelement (152) erfasst, welches bevorzugt als zweiter Magnet, insbesondere als Ringmagnet ausgeführt ist.

5. Vorrichtung nach einem der Ansprüche 2 bis 4,
**dadurch gekennzeichnet, dass**
die Hubeinrichtung (16) eine durch einen zweiten Antriebsmotor (30) rotierbare Gewindehülse (34, 134) umfasst, die zur axialen Bewegung der Hubhülse (17, 117) mit einem an der Hubhülse (17, 117) geformten Gewindeabschnitt (117a) in Zahneingriff ist.

6. Vorrichtung nach Anspruch 5,
**dadurch gekennzeichnet, dass**
die Gewindehülse (34) ein Innengewinde und die Hubhülse (17) ein Außengewinde aufweist, oder dass die Gewindehülse (134) ein Außengewinde und die Hubhülse (117) ein Innengewinde aufweist.

7. Vorrichtung nach Anspruch 5 oder 6,
**dadurch gekennzeichnet, dass**
sich der motorseitige Wellenabschnitt (12a) der Antriebswelle (12) durch das Zentrum des zweiten Antriebsmotors (30) hindurch erstreckt.

8. Vorrichtung nach Anspruch 7,
**dadurch gekennzeichnet, dass**
die Antriebswelle (32) des zweiten Antriebsmotors (30) eine Hohlwelle ist, mit der die Gewindehülse (34, 134) drehfest und in axialer Richtung unverschiebbar gekoppelt ist.

9. Vorrichtung nach einem der Ansprüche 2 bis 8,
**dadurch gekennzeichnet, dass**
die Außenseite der Hubhülse (17, 117) eine zylindermantelförmige Gleitfläche (17b, 117b) aufweist, über welche die Hubhülse (17, 117) in axialer Richtung innerhalb einer korrespondierend zur Gleitfläche (17b, 117b) geformten Innenfläche (2a, 102a) des Gehäuses (2) verschiebbar ist, wobei die Hubhülse (17, 117) über eine Nut (18a; 118a) und ein in diese eingreifendes Sicherungselement (18b; 118b) während einer axialen Bewegung in Umfangsrichtung gegen ein Verdrehen gesichert wird.

10. Vorrichtung nach einem der vorhergehenden Ansprüche,
**dadurch gekennzeichnet, dass**
die federelastischen Mittel eine bevorzugt vorgespannte Druckfeder (14) umfassen.

11. Vorrichtung nach Anspruch 10,
**dadurch gekennzeichnet, dass**
das Ausgleichselement (14) ein dämpfendes Element (15) zur Dämpfung von Axialschwingungen des ersten und zweiten Wellenabschnitts (12a, 12b) enthält.

12. Vorrichtung nach einem der vorhergehenden Ansprüche,
**dadurch gekennzeichnet, dass**
das Mischelement (6) eine sich in Richtung zur Auslassöffnung (7) hin verjüngende konische Form aufweist, und dass die Auslassöffnung (7) auf der Innenseite der Mischkammer (4) einen ringförmigen Aufnahmesitz (7a) besitzt, in welchem ein Gleitelement, insbesondere ein Gleitring, aufnehmbar ist, auf welchem sich das Mischelement (6) mit seiner Spitze in der Schließposition dichtend abstützt.

13. Vorrichtung nach einem der vorhergehenden Ansprüche,
**dadurch gekennzeichnet, dass**
der erste Antriebsmotor (10) ein Elektromotor, bevorzugt ein Schrittmotor oder Servomotor ist, der durch eine elektronische Steuerungs- und Regelungseinrichtung (40) gemäß einem vorgegebenen Geschwindigkeitsprofil antreibbar ist.

14. Vorrichtung nach einem der vorhergehenden Ansprüche,
**dadurch gekennzeichnet, dass**
dem zweiten mischkopfseitigen Wellenabschnitt (12b) ein Druckmittelraum (62) zugeordnet ist, der über eine Druckluftzuleitung (60) mit Druckluft beafschlagbar ist, um den zweiten mischkopfseitigen Wellenabschnitt (12b) mit einer axial wirkenden Druckkraft zu beaufschlagen, welche diesen entgegen der Kraft der federelastischen Mittel des Ausgleichselements (14) zur Freigabe der Austrittsöffnung (7) in axialer Richtung von dieser weg bewegt.

## Claims

1. Apparatus (1) for mixing two or more components (A, B), in particular of a plastics mixture, comprising a mixing chamber (4), which is received in a frame-fixed manner in a housing (2) and has at least two feed channels (8a, 8b) via which the components to be mixed are able to be fed into the mixing chamber (4), a mixing element (6), which is arranged in the mixing chamber (4) and is rotatable by way of a first motor (10) via a drive shaft (12), and a stroke device (16), by means of which the mixing element (6) within the mixing chamber (4) is movable in an axial direction relative to the mixing chamber (4) from a release position into a closed position for the purpose of closing off an outlet opening (7) arranged in the movement path of the mixing element (6),
**characterized in that**
the drive shaft (12) has a first, motor-side shaft portion (12a) and a second, mixing-head-side shaft portion (12b), which are coupled to one another in a rotationally conjoint manner via a compensation element (14), said compensation element comprising resiliently elastic means which push the first, motor-side shaft portion (12a) away from the second, mixing-head-side shaft portion (12b).

2. Apparatus according to Claim 1,
**characterized in that**
the stroke device (16) comprises a stroke sleeve (17), and **in that** a first sensor (41) is received on the housing (2) and detects the distance from a first measurement-encoder element fastened to the stroke sleeve (17) and interacting with the first sensor (41), which first measurement-encoder element is in particular in the form of a first measurement finger (42), or **in that** the stroke device (16) comprises a stroke sleeve (117), and **in that** a first sensor (141) is received on the housing (2) and detects the distance from a first measurement-encoder element fastened to the stroke sleeve (117) and interacting with the first sensor (141), which first measurement-encoder element is preferably in the form of a first magnet, in particular annular magnet (142).

3. Apparatus according to either of the preceding claims,
**characterized in that**
a bearing sleeve (24, 124) is mounted coaxially on the mixing-head-side shaft portion (12b) of the drive shaft (12) via mixing-head-side radial ball bearings (22a, 22b), and **in that** the outer side of the bearing sleeve (24, 124) comprises a sliding surface (24b, 124b) which is in the form of a cylinder shell and via which the bearing sleeve (24, 124) is guided within an inner surface (2a, 102a), formed in a manner corresponding to the sliding surface (24b, 124b), of the housing (2) so as to be displaceable in an axial direction and so as to be rotationally conjoint in a radial direction.

4. Apparatus according to Claim 3,
**characterized in that**
a second sensor (51) is received on the stroke sleeve (17) and detects the distance from a second measurement-encoder element received on the bearing sleeve (24) and interacting with the second sensor (51), which second measurement-encoder element is in particular a second measurement finger (52), or **in that** a second sensor (151) is received on the housing (2) and detects the distance from a second measurement-encoder element received on the bearing sleeve (24) and interacting with the second sensor (151), which second measurement-encoder element (152) is preferably in the form of a second magnet, in particular in the form of an annular magnet.

5. Apparatus according to one of Claims 2 to 4,
**characterized in that**
the stroke device (16) comprises a threaded sleeve (34, 134) which is rotatable by way of a second drive motor (30) and which, for axial movement of the stroke sleeve (17, 117), is in meshing engagement with a threaded portion (117a) formed on the stroke sleeve (17, 117).

6. Apparatus according to Claim 5,
**characterized in that**
the threaded sleeve (34) has an internal thread and the stroke sleeve (17) has an external thread, or **in that** the threaded sleeve (134) has an external thread and the stroke sleeve (117) has an internal thread.

7. Apparatus according to Claim 5 or 6,
**characterized in that**
the motor-side shaft portion (12a) of the drive shaft (12) extends through the centre of the second drive motor (30).

8. Apparatus according to Claim 7,
**characterized in that**
the drive shaft (32) of the second drive motor (30) is a hollow shaft, to which the threaded sleeve (34, 134) is coupled in a rotationally conjoint manner and so as to be non-displaceable in an axial direction.

9. Apparatus according to one of Claims 2 to 8,
**characterized in that**
the outer side of the stroke sleeve (17, 117) has a sliding surface (17b, 117b) which is in the form of a cylinder shell and via which the stroke sleeve (17, 117) is displaceable in an axial direction within an inner surface (2a, 102a), formed in a manner corresponding to the sliding surface (17b, 117b), of the housing (2), wherein the stroke sleeve (17, 117) is secured against rotation in a circumferential direction during an axial movement via a groove (18a, 118a) and a securing element (18b, 118b) engaging into said groove.

10. Apparatus according to one of the preceding claims,
**characterized in that**
the resiliently elastic means comprise a preferably prestressed compression spring (14).

11. Apparatus according to Claim 10,
**characterized in that**
the compensation element (14) comprises a damping element (15) for damping axial vibrations of the first and second shaft portions (12a, 12b).

12. Apparatus according to one of the preceding claims,
**characterized in that**
the mixing element (6) has a conical shape which narrows in the direction towards the outlet opening (7), and **in that** the outlet opening (7), on the inner side of the mixing chamber (4), has an annular receiving seat (7a) in which a sliding element, in particular a sliding ring, on which the mixing element (6) is supported in a sealing manner at its tip in the closed position is able to be received.

13. Apparatus according to one of the preceding claims,
**characterized in that**
the first drive motor (10) is an electric motor, preferably a stepper motor or servo motor, which is able to be driven by an electronic control and regulation device (40) according to a predefined speed profile.

14. Apparatus according to one of the preceding claims,
**characterized in that**
the second, mixing-head-side shaft portion (12b) is assigned a pressure-medium chamber (62) which is able to be charged with compressed air via a compressed-air feed line (60) in order for an axially acting pressure force to be applied to the second, mixing-head-side shaft portion (12b) by which the latter, for the purpose of opening up the exit opening (7), is moved away therefrom in an axial direction counter to the force of the resiliently elastic means of the compensation element (14).

## Revendications

1. Dispositif (1) pour mélanger deux constituants (A, B) ou plus, en particulier d'un mélange de matières synthétiques, comprenant une chambre de mélange (4) reçue de manière solidaire d'un bâti dans un carter (2) et dotée d'au moins deux canaux d'acheminement (8a, 8b), par le biais desquels les constituants à mélanger peuvent être acheminés à la chambre de mélange (4), un élément de mélange (6) disposé dans la chambre de mélange (4), lequel peut être entraîné en rotation par un premier moteur (10) par le biais d'un arbre d'entraînement (12), et un dispositif de va-et-vient (16), au moyen duquel l'élément de mélange (6) peut être déplacé à partir d'une position de libération dans la direction axiale par rapport à la chambre de mélange (4) jusqu'à une position de fermeture à l'intérieur de la chambre de mélange (4) pour la fermeture d'une ouverture de sortie (7) disposée dans le trajet de déplacement de l'élément de mélange (6),
**caractérisé en ce que**
l'arbre d'entraînement (12) présente une première partie d'arbre (12a) côté moteur et une deuxième partie d'arbre (12b) côté tête de mélange, lesquelles sont accouplées l'une à l'autre de manière solidaire en rotation par le biais d'un élément de compensation (14), lequel contient des moyens élastiques qui poussent la première partie d'arbre (12a) côté moteur à l'écart de la deuxième partie d'arbre (12b) côté tête de mélange.

2. Dispositif selon la revendication 1,
**caractérisé en ce que**
le dispositif de va-et-vient (16) comprend une douille de va-et-vient (17), et **en ce qu'**un premier capteur (41) est reçu au niveau du carter (2), lequel détecte la distance à un premier élément détecteur de mesure fixé à la douille de va-et-vient (17) et coopérant avec le premier capteur (41), lequel élément détecteur de mesure est réalisé en particulier sous forme de premier doigt de mesure (42), ou **en ce que** le dispositif de va-et-vient (16) comprend une douille de va-et-vient (117), et **en ce qu'**un premier capteur (141) est reçu au niveau du carter (2), lequel premier capteur détecte la distance à un premier élément détecteur de mesure fixé à la douille de va-et-vient (117) et coopérant avec le premier capteur (141), lequel premier élément détecteur de mesure est réalisé de préférence sous la forme d'un premier aimant, en particulier sous forme d'aimant annulaire (142).

3. Dispositif selon l'une des revendications précédentes,
**caractérisé en ce**
**qu'**une douille de palier (24, 124) est montée de manière coaxiale sur la partie d'arbre (12b) côté tête de mélange de l'arbre d'entraînement (12) par le biais de paliers à billes radiaux (22a, 22b) côté tête de mélange, et **en ce que** le côté extérieur de la douille de palier (24, 124) comprend une surface de glissement (24b, 124b) en forme d'enveloppe cylindrique, surface par le biais de laquelle la douille de palier (24, 124) est déplaçable dans la direction axiale et est guidée de manière solidaire en rotation dans la direction radiale à l'intérieur d'une surface intérieure (2a, 102a) du carter (2) formée de manière à correspondre à la surface de glissement (24b, 124b).

4. Dispositif selon la revendication 3,
**caractérisé en ce**
**qu'**un deuxième capteur (51) est reçu au niveau de la douille de va-et-vient (17), lequel détecte la distance à un deuxième élément détecteur de mesure reçu au niveau de la douille de palier (24) et coopérant avec le deuxième capteur (51), en particulier à un deuxième doigt de mesure (52), ou **en ce qu'**un deuxième capteur (151) est reçu au niveau du carter (2), lequel deuxième capteur détecte la distance à un deuxième élément détecteur de mesure (152) reçu au niveau de la douille de palier (24) et coopérant avec le deuxième capteur (151), lequel deuxième élément détecteur de mesure est réalisé de préférence sous forme de deuxième aimant, en particulier sous forme d'aimant annulaire.

5. Dispositif selon l'une des revendications 2 à 4,
**caractérisé en ce que**
le dispositif de va-et-vient (16) comprend une douille filetée (34, 134) pouvant être entraînée en rotation par un deuxième moteur d'entraînement (30), laquelle est en engrènement avec une partie filetée (117a) formée sur la douille de va-et-vient (17, 117) pour le déplacement axial de la douille de va-et-vient (17, 117).

6. Dispositif selon la revendication 5,
**caractérisé en ce que**
la douille filetée (34) présente un filetage intérieur et la douille de va-et-vient (17) présente un filetage extérieur, ou **en ce que** la douille filetée (134) présente un filetage extérieur et la douille de va-et-vient (117) présente un filetage intérieur.

7. Dispositif selon la revendication 5 ou 6,
**caractérisé en ce que**
la partie d'arbre (12a) côté moteur de l'arbre d'entraînement (12) passe par le centre du deuxième moteur d'entraînement (30).

8. Dispositif selon la revendication 7,
**caractérisé en ce que**
l'arbre d'entraînement (32) du deuxième moteur d'entraînement (30) est un arbre creux auquel la douille filetée (34, 134) est accouplée de manière solidaire en rotation et de manière immobile dans la direction axiale.

9. Dispositif selon l'une des revendications 2 à 8,
**caractérisé en ce que**
le côté extérieur de la douille de va-et-vient (17, 117) présente une surface de glissement (17b, 117b) en forme d'enveloppe cylindrique, surface de glissement par le biais de laquelle la douille de va-et-vient (17, 117) est déplaçable dans la direction axiale à l'intérieur d'une surface intérieure (2a, 102a) du carter (2) formée de manière à correspondre à la surface de glissement (17b, 117b), la douille de va-et-vient (17, 117) étant bloquée de manière à empêcher une rotation pendant un déplacement axial dans la direction circonférentielle par le biais d'une rainure (18a ; 118a) et d'un élément de blocage (18b ; 118b) venant en prise dans celle-ci.

10. Dispositif selon l'une des revendications précédentes,
**caractérisé en ce que**
les moyens élastiques comprennent un ressort de compression (14) de préférence précontraint.

11. Dispositif selon la revendication 10,
**caractérisé en ce que**
l'élément de compensation (14) contient un élément amortisseur (15) servant à l'amortissement de vibrations axiales de la première et de la deuxième partie d'arbre (12a, 12b).

12. Dispositif selon l'une des revendications précédentes,
**caractérisé en ce que**
l'élément de mélange (6) présente une forme conique se rétrécissant en direction de l'ouverture de sortie (7), et **en ce que** l'ouverture de sortie (7) possède, sur le côté intérieur de la chambre de mélange (4), un siège de réception annulaire (7a) dans lequel un élément de glissement, en particulier une bague de glissement, peut être reçu(e), siège sur lequel l'élément de mélange (6) s'appuie de manière étanche par sa pointe dans la position de fermeture.

13. Dispositif selon l'une des revendications précédentes,
**caractérisé en ce que**
le premier moteur d'entraînement (10) est un moteur électrique, de préférence un moteur pas à pas ou un servomoteur, qui peut être entraîné par un dispositif électronique de commande et de régulation (40) selon un profil de vitesse prédéfini.

14. Dispositif selon l'une des revendications précédentes,
**caractérisé en ce**
**qu'**un espace de fluide sous pression (62) est associé à la deuxième partie d'arbre (12b) côté tête de mélange, lequel espace de fluide sous pression peut être alimenté en air comprimé par le biais d'une conduite d'amenée d'air comprimé (60), afin de soumettre la deuxième partie d'arbre (12b) côté tête de mélange à l'action d'une force de pression agissant axialement, laquelle déplace cette partie d'arbre à l'encontre de la force des moyens élastiques de l'élément de compensation (14) à l'écart de l'ouverture de sortie (7) dans la direction axiale pour la libération ce cette ouverture.
